# EUROPEAN PATENT SPECIFICATION

(11) **EP 4 246 713 B1**
(45) Date of publication and mention of the grant of the patent: **10.06.2026**
(21) Application number: 21900980.0
(22) Date of filing: 01.12.2021
(51) Int. Cl.: H01Q 1/22, H01Q 1/08, H01Q 1/44, H01Q 5/321, H01Q 5/35, H01Q 9/14, G09F 9/30, G06F 1/16

(54) **ANTENNA STRUCTURE AND ELECTRONIC DEVICE COMPRISING SAME**
ANTENNENSTRUKTUR UND ELEKTRONISCHE VORRICHTUNG DAMIT
STRUCTURE D'ANTENNE ET DISPOSITIF ÉLECTRONIQUE LA COMPRENANT

(30) Priority: 01.12.2020 KR 20200165956; 20.05.2021 KR 20210065028
(43) Date of publication of application: 20.09.2023
(73) Proprietor: Samsung Electronics Co., Ltd., Suwon-si, Gyeonggi-do 16677 (KR)
(72) Inventor: JEON, Sinhyung, Suwon-si Gyeonggi-do 16677 (KR); SEO, Soohyun, Suwon-si Gyeonggi-do 16677 (KR); SHIM, Jongwan, Suwon-si Gyeonggi-do 16677 (KR); YOO, Minwoo, Suwon-si Gyeonggi-do 16677 (KR); YOON, Byounguk, Suwon-si Gyeonggi-do 16677 (KR); CHOI, Jongchul, Suwon-si Gyeonggi-do 16677 (KR)
(74) Representative: Nederlandsch Octrooibureau
(86) International application number: PCT/KR2021/017936
(87) International publication number: WO 2022/119292

(56) References cited:
- CN-A- 111 384 583
- KR-A- 20140 105 886
- KR-A- 20170 050 270
- KR-A- 20190 091 711
- KR-A- 20190 143 029
- KR-A- 20200 115 941
- US-A1- 2020 209 924

## Description

### [Technical Field]

Various embodiments disclosed herein relate to an electronic device including a flexible display, and an antenna structure thereof.

### [Background Art]

As the demand for mobile communication increases and the degree of integration of electronic devices increases, the portability of electronic devices such as mobile communication terminals may be improved, and convenience in using multimedia functions and the like may be improved. For example, by replacing a traditional mechanical (button-type) keypad with a display in which a touch screen function is integrated, it is possible to downsize an electronic device while maintaining the function of the input device thereof. For example, by removing a mechanical keypad from an electronic device, it is possible to improve the portability of the electronic device. In another embodiment, when a display is expanded by the area in which a mechanical keypad is removed, an electronic device including a touch screen function may provide a larger screen compared to an electronic device including a mechanical keypad, even when the electronic device including the touch screen function has the same size and weight as the electronic device including the mechanical keypad.

In using a web surfing or multimedia function, it may be more convenient for a user to use an electronic device that outputs a large screen. A larger display may be mounted on an electronic device in order to output a large screen. However, in view of the portability of the electronic device, there may be restrictions in increasing the size of the display. In an embodiment, a display using an organic light-emitting diode or the like may make it possible to ensure portability of an electronic device while providing a larger screen. For example, a display using an organic light-emitting diode (or an electronic device equipped with the display) may make it possible to implement a stable operation even if the display is made very thin so that the display may be mounted in an electronic device in a foldable, bendable, slidable, or rollable form. As described above, by mounting a display using an organic light-emitting diode in an electronic device in a foldable, slidable, or rollable form, it is possible to provide an electronic device that outputs a larger screen to the user. Patent document CN 111 384 583 A, published on 7 July 2020, discloses an electronic device comprising main body, an antenna radiator, the antenna radiator is arranged in the main body; a driving mechanism, the driving mechanism is connected with the antenna radiator and drives the antenna radiator to move in the main body; an antenna performance detection unit, the antenna performance detection unit is electrically connected to the antenna radiator, and obtains the signal strength value of the antenna radiator; a control unit, the antenna performance detection unit and the driving mechanism are both connected to the control unit, and the control unit is configured to control the driving mechanism to drive the antenna radiator according to the signal strength value of the antenna radiator mobile.

### [Detailed Description of the Invention]

### [Technical Problem]

In an existing electronic device having a fixed display, the electromagnetic influence between the antenna and the display was insignificant, and since the antenna was designed to reflect the influence of the surrounding conductors, constant radiation performance was maintained.

In an electronic device including a flexible display, due to a form factor different from that of conventional electronic devices configured such that the separation distance between the display panel and an antenna is changed when the display panel is wound or unwound, electromagnetic interference is continuously caused between the antenna and the display. Since the display is able to serve as a conductor, the radiation performance of the antenna changes depending on the separation distance between the display that is wound or unwound and the antenna.

According to various embodiments of the disclosure, in an electronic device including a flexible display, a display ground is connected to an antenna to control the performance of the antenna when the display is wound or unwound.

According to various embodiments of the disclosure, various antenna radiation characteristics are obtained depending on winding or unwinding of the display by using a plurality of antennas and switches.

### [Technical Solution]

According to various embodiments disclosed herein, there is provided an electronic device as defined in the independent claims. Advantageous modifications are defined in the dependent claims.

### [Advantageous Effects]

According to various embodiments of the disclosure, by electrically connecting the flexible display and antennas to each other, it is possible to control the performance of each antenna when the flexible display is wound or unwound.

According to various embodiments of the disclosure, by electrically connecting a display ground of the flexible display to an antenna to make the resonance frequency of the antenna variable when the flexible display is wound or unwound, it is possible to control the radiation performance of the antenna.

According to various embodiments of the disclosure, in an electronic device including a rollable display, it is possible to execute efficient communication by controlling a frequency band of an antenna.

### [Brief Description of Drawings]

FIG. 1 is a block diagram of an electronic device according to various embodiments of the disclosure in a network environment.
FIG. 2 is a view illustrating an electronic device according to various embodiments disclosed herein in the state in which a portion of a flexible display is accommodated in a second structure.
FIG. 3 is a view illustrating the electronic device according to various embodiments disclosed herein in the state in which most of the flexible display is exposed to the outside of the second structure.
FIG. 4 is a perspective view illustrating an electronic device according to various embodiments disclosed herein.
FIG. 5 is an exploded perspective view illustrating an electronic device according to various embodiments disclosed herein.
FIG. 6A is a view illustrating a connection structure between a flexible display and a roller of an electronic device according to various embodiments disclosed herein.
FIG. 6B is a perspective view illustrating the connection structure between the flexible display and the roller of the electronic device according to various embodiments disclosed herein.
FIG. 6C is a view illustrating the connection structure between the roller and the bracket of the electronic device according to various embodiments disclosed herein.
FIG. 7A is a view illustrating a connection structure of components of an electronic device according to various embodiments disclosed herein.
FIG. 7B is an enlarged view of a portion of the connection structure between components of the electronic device according to various embodiments disclosed herein.
FIG. 8A is a view schematically representing a cross-sectional view viewed from above when winding a display of an electronic device according to various embodiments disclosed herein.
FIG. 8B is a view representing a connection relationship between components when winding the display of the electronic device according to various embodiments disclosed herein.
FIG. 8C is a view illustrating radiation characteristics of an antenna when winding the display of the electronic device according to various embodiments disclosed herein.
FIG. 9A is a view schematically representing a cross-sectional view viewed from above when unwinding a display of an electronic device according to various embodiments disclosed herein.
FIG. 9B is a view representing a connection relationship between components when unwinding the display of the electronic device according to various embodiments disclosed herein.
FIG. 9C is a view representing a radiation characteristic of the antenna when unwinding the display of the electronic device to which one antenna according to various embodiments disclosed herein is applied.
FIG. 10A is a view schematically representing a cross-sectional view viewed from above when unwinding or winding a display of an electronic device that includes a plurality of antennas according to various embodiments disclosed herein.
FIG. 10B is a view representing a connection relationship between components when unwinding or winding the display of the electronic device that includes a plurality of antennas according to various embodiments disclosed herein.
FIG. 10C is a view illustrating radiation characteristics of antennas when winding and unwinding a display of an electronic device to which a plurality of antennas according to various embodiments disclosed herein are applied.

### [Mode for Carrying out the Invention]

Hereinafter, various embodiments of the disclosure may be described with reference to the accompanying drawings.

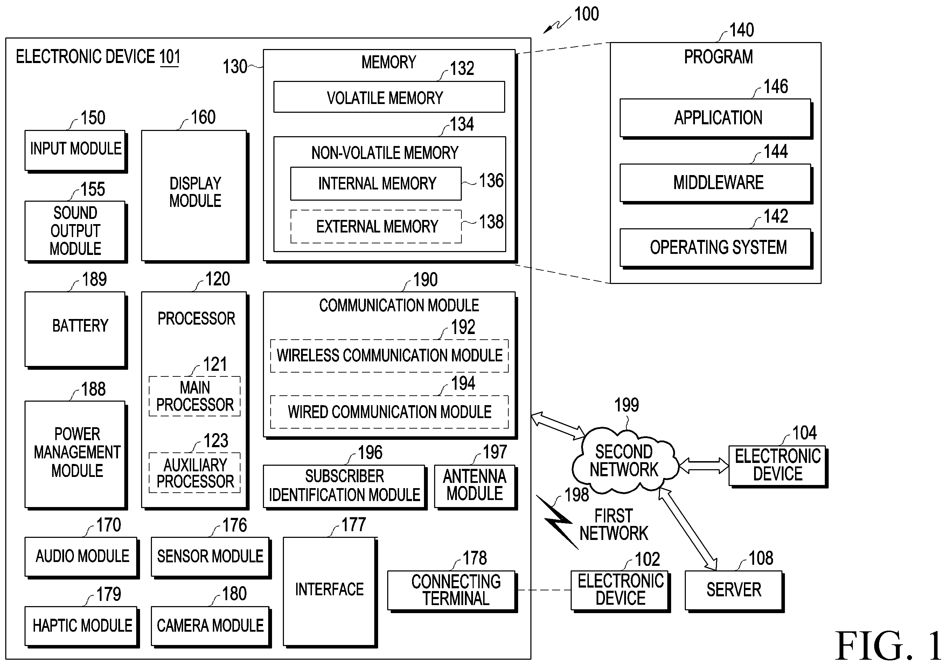

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

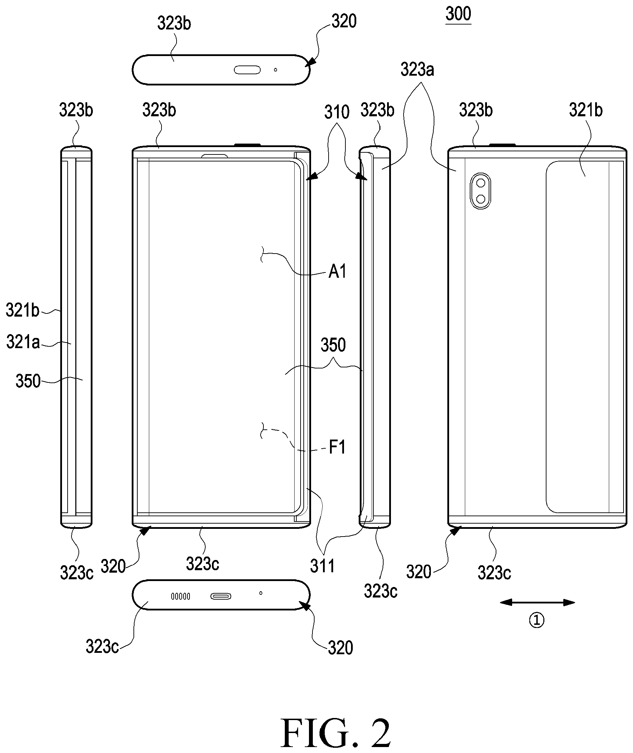

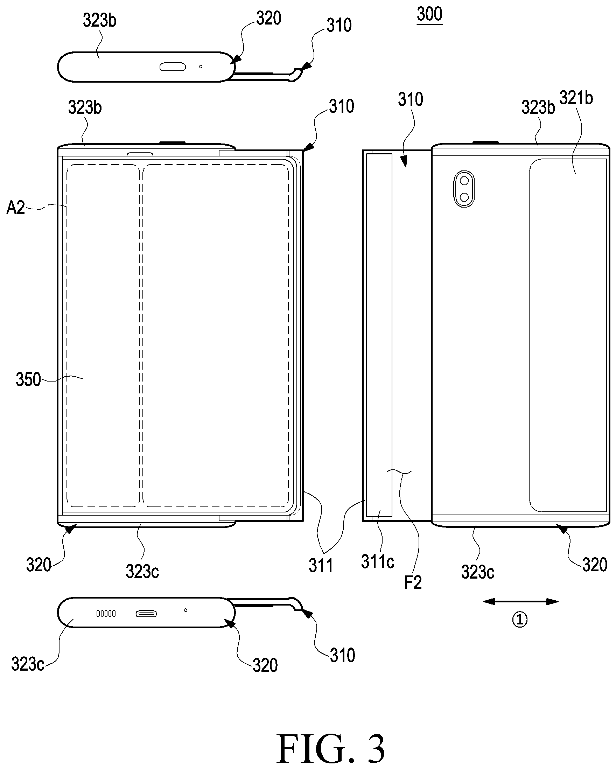

FIG. 2 is a view illustrating an electronic device 300 according to various embodiments disclosed herein in the state in which a portion of the flexible display 350 is accommodated in a second structure 320. FIG. 3 is a view illustrating the electronic device 300 according to various embodiments disclosed herein in the state in which most of the flexible display 350 is exposed to the outside of the second structure 320.

The electronic device 300 of FIGS. 2 and 3 is another example of the electronic device 101 illustrated in FIG. 1 and may be a slidable electronic device.

The state illustrated in FIG. 2 may be defined as the state in which the first structure 310 is closed relative to the second structure 320, and the state illustrated in FIG. 3 may be defined as the state in which the first structure 310 is opened relative to the second structure 320. According to an embodiment, the "closed state" or the "opened state" may be defined as the state in which the electronic device is closed or the state in which the electronic device is opened. According to an embodiment, the closed state of the electronic device 300 may be defined as the state in which the width of the slidable housing 301 of the electronic device 300 is the minimum, and the opened state of the electronic device 300 may be defined as the state in which the width of the slidable housing 301 of the electronic device 200 is the maximum. According to another embodiment, the closed state of the electronic device 300 may be defined as the state in which the area of the portion of the display 350 exposed to the outside is minimized, and the opened state of the electronic device 300 may be defined as the state in which the area of the display 350 exposed to the outside is maximized.

Referring to FIGS. 2 and 3, the electronic device 300 may include a first structure 310 and a second structure 320 disposed to be movable on the first structure 310. In some embodiments, the electronic device 300 may be interpreted as having a structure in which the first structure 310 is disposed to be slidable on the second structure 320. According to an embodiment, the first structure 310 may be disposed to be reciprocable by a predetermined distance in the illustrated direction (e.g., the direction indicated by arrow ①) with respect to the second structure 320.

According to various embodiments, the first structure 310 may be referred to as, for example, a first housing structure, a slide part, or a slide housing, and may be disposed to be reciprocable on the second structure 320. In an embodiment, the second structure 320 may be referred to as, for example, a second housing, a main part, or a main housing, and may accommodate various electrical and electronic components such as a main circuit board or a battery. A portion of the display 350 (e.g., the first area A1) may be seated on the first structure 310. According to an embodiment, when the first structure 310 moves (e.g., slides) relative to the second structure 320, another portion of the display 350 (e.g., the second area A2) may be accommodated inside the second structure 320 (e.g., a slide-in operation) or exposed to the outside of the second structure 320 (e.g., a slide-out operation). Here, a portion of the display 350 (e.g., the first area A1) may be a basic use area when the display 350 is in the slide-in state, and another portion of the display 350 (e.g., the second area A2) may be an expansion area in the slide-out state.

FIGS. 2 and 3 illustrate an embodiment in which the basic use area of the display 350 (e.g., the first area A1) in the slid-in state is seated on the first structure 310. In addition, according to the embodiment illustrated in FIG. 3, the basic use area (e.g., the first area A1) in the slid-out state of the display 350 is disposed on the right side in the direction in which the display 350 is expanded and the expansion area (e.g., the second area A2) is disposed on the left side of the display 350. However, the disclosure is not necessarily limited thereto. Unlike that illustrated in FIG. 3, the basic use area of the display 350 (e.g., the first area A1) in the slid-out state may be disposed on the left side, which is opposite to the direction in which the display 350 is expanded, and the expansion area (e.g., the second region A2) may be disposed on the right side of the display 350.

According to various embodiments, the first structure 310 may include a first plate 311 (e.g., a slide plate) and may include a first surface F1 including at least a portion of the first plate 311 and a second surface F2 facing away from the first surface F1. According to an embodiment, the second structure 320 may include a second plate 321a (e.g., a rear surface case), a first side wall 323a extending from the second plate 321a, a second side wall 323b extending from the first side wall 323a and the second plate 321a, a third side wall 323c extending from the first side wall 323a and the second plate 321a and parallel to the second side wall 323b, and/or a rear surface plate 321b (e.g., a rear window). In some embodiments, the second side wall 323b and the third side wall 323c may be perpendicular to the first side wall 323a. According to an embodiment, the second plate 321a, the first side wall 323a, the second side wall 323b, and the third side wall 323c may be opened on one side (e.g., the front surface) to accommodate (or surround) at least a portion of the first structure 310. For example, the first structure 310 is coupled to the second structure 320 in a state of being at least partially surrounded and may slide in a direction parallel to the first surface F1 or the second surface F2 (e.g., the direction indicated by arrow ①) while being guided by the second structure 320.

According to various embodiments, the second side wall 323b or the third side wall 323c may be omitted. According to an embodiment, the second plate 321a, the first side wall 323a, the second side wall 323b, and/or the third side wall 323c may be configured as separate structures and coupled or assembled to each other. The rear surface plate 321b may be coupled to surround at least a portion of the second plate 321a. In another embodiment, the rear surface plate 321b may be substantially integrated with the second plate 321a. According to an embodiment, the second plate 321a or the rear surface plate 321b may cover at least a portion of the flexible display 350. For example, the flexible display 350 may be at least partially accommodated inside the second structure 320, and the second plate 321a or the rear surface plate 321b may cover a portion of the flexible display 350 accommodated inside the second structure 320.

According to various embodiments, the first structure 310 is movable to the opened state or the closed state relative to the second structure 320 in a first direction (e.g., direction ①) parallel to the second plate 321a (e.g., the rear surface case) and the first side wall 323a so that the first structure 310 is located at a first distance from the first side wall 323a in the closed state and at a second distance, which is greater than the first distance, from the first side wall 323a in the opened state. In some embodiments, in the closed state, the first structure 310 may be located to surround a portion of the first side wall 323a.

According to various embodiments, unlike the above-described embodiments, the first side wall 323a may move integrally with the first structure 310. The second structure 320 may include a fourth side wall (not illustrated) located opposite to the first side wall 323a, and may be applied in a form in which, in the state in which the fourth side wall (not illustrated) is fixed, the first side wall 323a moves away from the fourth side wall (not illustrated) simultaneously with the movement of the first structure 310. In addition, the expansion of the slidable housing according to the sliding movement of the first structure 310 may vary depending on embodiments.

According to various embodiments, the electronic device 300 may include a display 350, a key input device, a connector hole, an audio module, or a camera module. Although not illustrated, the electronic device 300 may further include an indicator (e.g., an LED device) or various sensor modules. Here, the display 350 may be coupled to or disposed adjacent to a touch detection circuit, a pressure sensor capable of measuring a touch intensity (pressure), and/or a digitizer configured to detect a magnetic field-type stylus pen.

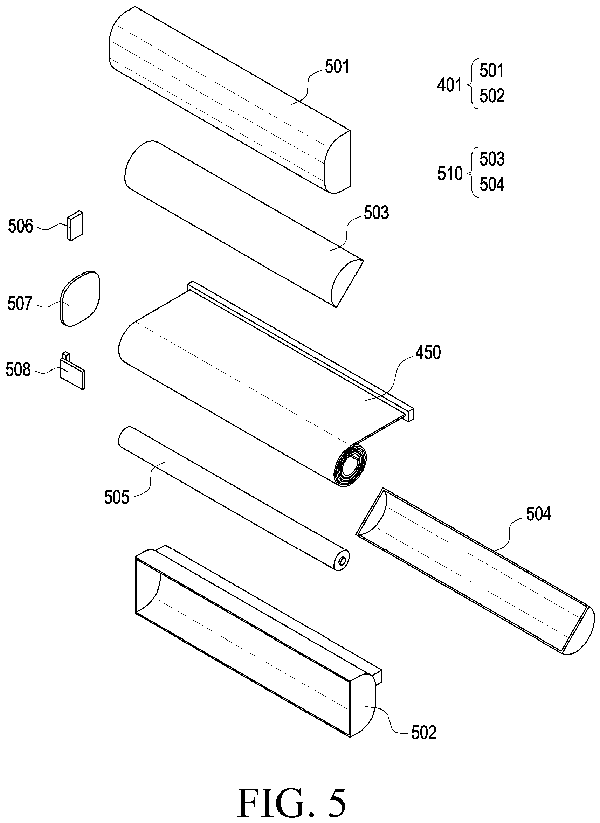

According to various embodiments, the display 350 may include a first area A1 and a second area A2. In an embodiment, the first area A1 may extend substantially across at least a portion of the first plate 311 to be disposed on the first surface F1. The second area A2 may extend from the first area A1 and may be inserted or accommodated into the inside of the second structure 320 (e.g., the main housing) or may be exposed to the outside of the second structure 320 according to the sliding of the first structure 311. As will be described later, the second area A2 may be moved while substantially being guided by a guide member (e.g., a roller) mounted on the second structure 320 to be accommodated in the inside of the second structure 320 or exposed to the outside of the second structure 320. For example, while the first structure 310 slides, a portion of the second area A2 may be deformed into a curved shape at a position corresponding to the guide member. According to various embodiments, when viewed from above the first plate 311 (e.g., the slide plate), if the first structure 310 moves from the closed state to the opened state, the second area A2 may provide a substantially flat surface along with the first area A1 while being gradually exposed to the outside of the second structure 320. In some embodiments, the second area A2 may be at least partially accommodated inside the second structure 320, and a portion of the second region A2 may also be exposed to the outside even in the state illustrated in FIG. 5 (e.g., the closed state). In some embodiments, regardless of the closed state or the opened state, a portion of the exposed second area A2 may be located on the guide member (not illustrated), and a portion of the second region A2 may maintain a curved shape at a position corresponding to the guide member (not illustrated). FIGS. 2 and 3 illustrate an embodiment in which the guide member is provided on the left edge of the electronic device 300, but the disclosure is not necessarily limited thereto. Unlike this, an embodiment in which the guide member is provided on the right edge (e.g., the first side wall 323a portion) of the electronic device 300 may also be applied.

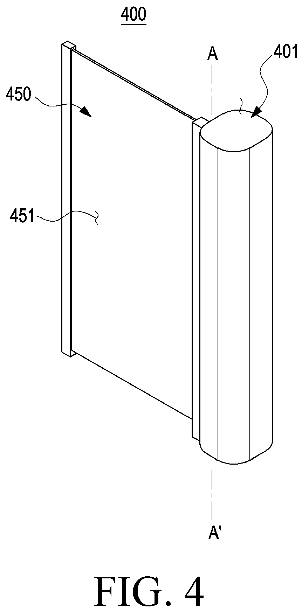

FIG. 4 is a perspective view illustrating an electronic device 400 according to various embodiments disclosed herein. FIG. 5 is an exploded perspective view illustrating the electronic device 400 according to various embodiments disclosed herein.

The electronic device 400 of FIGS. 4 and 5 is another example of the electronic device 101 illustrated in FIG. 1 and may be a rollable electronic device.

The electronic device 400 according to various embodiments disclosed herein may include a housing 401 and a flexible display or a rollable display (hereinafter referred to as a "display 450") at least partially accommodated (or received) in the housing 401.

The state illustrated in FIG. 4 may represent the state in which the display 450 is unfolded from the housing 401 of the electronic device 400. The state in which the display 450 is unfolded may be defined as an unwound state. In FIG. 4, the unfolded state of the display 450 may include the state in which a portion of the display 450 is exposed to the outside of the housing 401 and another portion is accommodated inside the housing 401. In addition, the state in which the display 450 is unfolded from the housing 401 may include the state in which at least a portion of the display 450 is rolled (or wound) and at least partially rolled portion is at least partially accommodated in the housing 401.

According to various embodiments, the display 450 is accommodated into the inside of the housing 401 by a slide-in operation or may be exposed to the outside of the housing 401 by a slide-out operation. According to an embodiment, the entire display 450 may be accommodated inside the housing 401 in the state in which the display 450 is maximally accommodated into the inside of the housing 401. Unlike this, according to another embodiment, in the state in which the display 450 is maximally accommodated into the inside of the housing 401, at least a portion of the display 450 may be exposed to the outside of the housing 401. The state in which the display 450 is maximally accommodated into the inside of the housing 401 may be defined as a wound state. For example, FIG. 4 may illustrate the state in which at least a portion of the display 450 (e.g., the first area 451) is exposed to the outside of the housing 401 in the state in which the display 450 is maximally accommodated into the inside of the housing 401.

Referring to FIG. 5, the housing 401 may accommodate, in the inner space thereof, at least a portion of the display 450, a bracket 510, a battery, and a roller 505, and various electrical and electronic components such as a ground member 506, a circuit board (e.g., a printed circuit board (PCB)) 507, and an antenna 508. For example, inside the housing 401, a processor (e.g., a central processor, a graphics processor, an image signal processor, or the like) for displaying a screen on the display 450 or a pressure sensor configured to detect a touch input or touch intensity may be accommodated. In addition, inside the housing 401, for example, components such as a camera module and sensor modules such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or a luminance sensor may be included.

According to various embodiments, the housing 401 may include a front surface housing 501 located in an opposite direction to the first direction in which the display 450 is unwound, and a rear surface housing 520 located in the first direction in which the display 450 is unwound. The form in which the front surface housing 501 and the rear surface housing 502 are coupled to each other may be defined as a housing 401. The front surface housing 501 and the rear surface housing 502 may be coupled to define the inner space. The front surface housing 501 and the rear surface housing 502 may be configured integrally with each other.

According to various embodiments, the housing 401 may include a flat portion oriented in the first direction. Also, according to one embodiment, the housing 401 may include a curved portion corresponding to the curved portion of the display. The curved part portion may have a shape in which one side extends from the flat portion and the other side is curved from the flat portion toward the rear surface of the housing 401 (e.g., the rear surface housing 502). The curved portion may seamlessly extend from the flat portion.

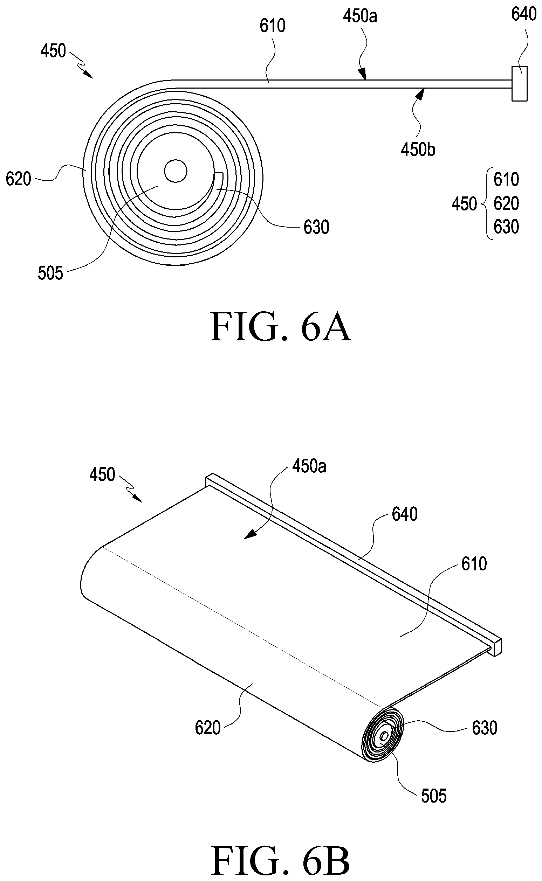

According to various embodiments, an opening through which the display 450 is received into or drawn out from the housing 401 may be provided in one surface of the housing 401. Through the opening, at least a portion of the display 450 (e.g., the second area 620 of FIG. 6A ) is wound into the inner space of the housing 401 by a sliding-in operation, or at least one different portion of the display 450 (e.g., the first area 610 of FIG. 6A ) may be unwound to the outside of the housing 401 by a sliding-out operation.

The display 450 may be coupled to or disposed adjacent to a touch-sensitive circuit, a pressure sensor capable of measuring touch intensity (pressure), and/or a digitizer configured to detect a magnetic field-type stylus pen. Accordingly, when a user touches the surface of the area exposed to the outside of the housing on the display 450, a corresponding touch input may be received. One surface of the display 450 (e.g., the first surface 450a or the second surface 450b of FIG. 6A ) may include a display ground on at least a portion of the display. The display ground may be connected to an antenna via a PCB or a switch. The display ground may be a grounded point located in the display and may be used as a ground for an antenna. At least a portion of the display 450 may be physically or electrically connected to a battery/roller 505, and details will be described with reference to FIGS. 6A and 6B.

According to various embodiments, an electronic device 101, 300, or 400 may include a flexible display 160, 350, or 450, wherein the flexible display 160, 350, or 450 may include an at least partially bendable display panel and a window member defining the exterior of the display.

According to various embodiments, the housing 401 may include a display 450 and a bracket 510 including a battery/roller 508. The bracket 510 may include a first bracket 503 enclosing at least a portion of the display 450 and a second bracket 504 enclosing the rest of the display 450 except for the at least a portion. The first bracket 503 and the second bracket 504 of the bracket 510 may be coupled to each other to define an inner space. The first bracket 503 and the second bracket 504 may be configured integrally with each other. The state in which the first bracket 503 and the second bracket 504 are coupled may be defined as the bracket 510. The bracket 510 may be physically or electrically connected to the battery/roller 505. The bracket 510 may be configured not to rotate. The battery/roller 505 may be configured to rotate (roll) for winding or unwinding of the display 450. The battery/roller 505 may be disposed in the inner space of the display 450 and may have a shape corresponding to the shape of the display 450. For example, the battery/roller 505 may have a cylindrical shape. The battery/roller 505 may be a type in which a battery is included in the roller. The battery/roller 505 may be physically and electrically connected to the display 450 and the bracket 510. A description of the connection method will be described in detail with reference to FIGS. 6A to 6C.

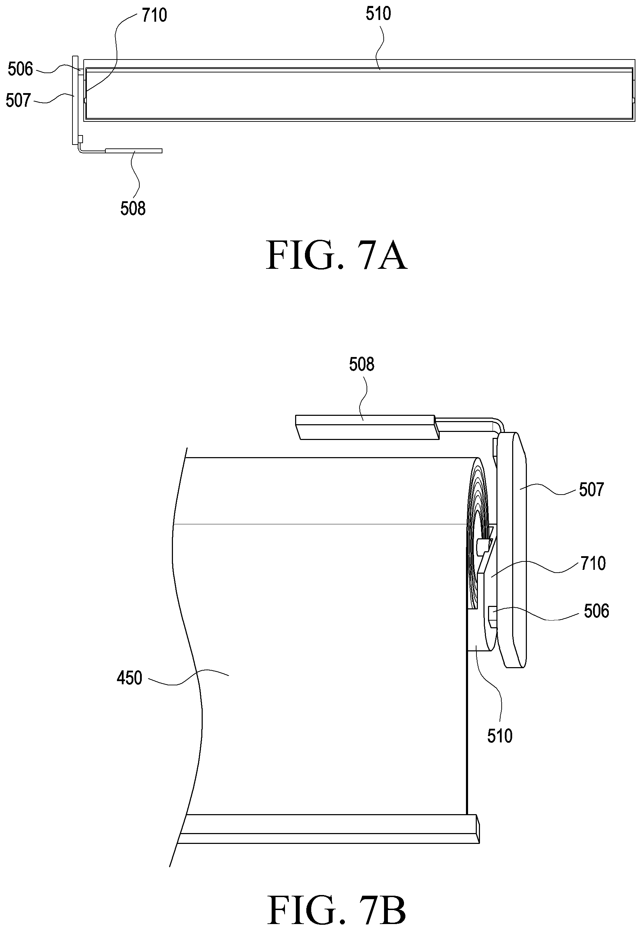

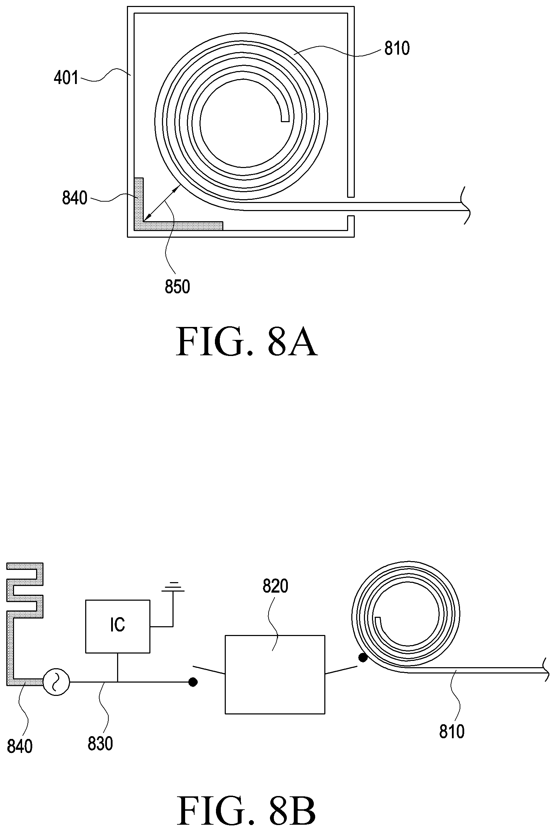

According to various embodiments, the housing 401 of the electronic device 400 may include a circuit board 507, a ground member 506, and an antenna 508. The circuit board 507 may include a printed circuit board (PCB). The circuit board 507 may include a processor configured to control the electronic device. The circuit board 507 may include a switch (e.g., the switch 820 in FIG. 8B) that is capable of electrically connecting and disconnecting the display. The circuit board 507 may be disposed outside the bracket 510. The circuit board 507 may be physically or electrically connected to the bracket 510 via the ground member 506. The ground member 506 may be made of a conductive material. The connection between the circuit board 507 and the bracket 510 will be described later in detail with reference to FIGS. 7A and 7B. The antenna 508 may communicate with an external device by using a frequency band. The antenna 508 may be physically and electrically connected to the circuit board 507. The antenna 508 may be connected to various positions depending on the shape of the circuit board 507. A plurality of antennas 508 may be provided depending on the design of the electronic device.

According to various embodiments, the display 450, the battery/roller 505, the bracket 510, the ground member 506, the circuit board 507, and the antenna 508 may be sequentially physically or electrically connected.

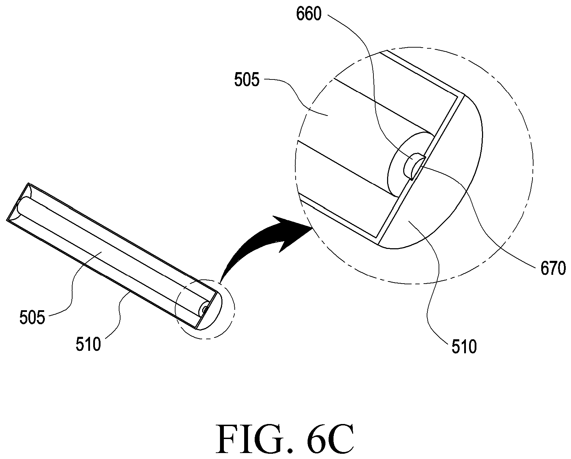

FIG. 6A is a view illustrating a connection structure between a flexible display and a roller of an electronic device according to various embodiments disclosed herein. FIG. 6B is a perspective view illustrating the connection structure between the flexible display and the roller of the electronic device according to various embodiments disclosed herein. FIG. 6C is a view illustrating the connection structure between the roller and the bracket of the electronic device according to various embodiments disclosed herein.

According to various embodiments, an electronic device (e.g., the electronic devices 101, 300, and 400 of FIGS. 1 to 5) may be a display (e.g., the display 350 of FIG. 2 or the display 450 of FIGS. 4 and 5), a battery/roller (e.g., the battery/roller 505 of FIGS. 4 and 5), and a bracket (e.g., the bracket 510 of FIGS. 4 and 5).

The display 450, bracket 510, and battery/roller 505 of FIGS. 6A to 6C may be wholly or partly the same as the display 450, bracket 510, and battery/roller 505 of FIGS. 4 and 5 in configuration.

Referring to FIGS. 6A and 6B, the display 450 may include at least one portion exposed to the outside of the bracket 510. The at least one portion may be defined as a first area 610. The display 450 may include a second area 620 extending from the first area 610 and at least partially bent. Here, the at least partially bent portion may refer to a portion of the second area 620 accommodated in the housing 401 in a rolled shape. According to an embodiment, the first area 610 may be exposed to the outside of the housing 401, and the second area 452 may have a shape extending from the first area 610 and wound and bent around the battery/roller 505. The display 450 may include a third area 630 that is physically or electrically connected to the battery/roller 505. The third area 630 may include an end opposite to an end connected to the frame 640 in the display 450. When the battery/roller 505 rotates through the third area 630, the display 450 may rotate. In the third region 630, a portion connected to the battery/roller 505 may be fixed even when the battery/roller 505 rotates. An area of the display 450 excluding the third area 630 may be disposed to be spaced apart from the battery/roller 505.

According to various embodiments, the display 450 may include a frame 640 configured to control winding or unwinding of the display. The frame 640 may be provided at an end opposite to a portion extending from the first area 610 to the second area 620. The display 450 may be unwound by moving the frame 640 in a direction away from the housing 401. According to an embodiment, as the frame 640 moves in a direction away from the housing 401, the first area 610, which is an area exposed to the outside of the housing 401 in the display 450, may be expanded. According to an embodiment, when the housing 410 and the frame 640 are separated from each other in the state in which the second area 620 is wound (rolled) in the inside of the housing 410, the display 450 may be expanded in one way.

According to various embodiments, the display 450 may include a first surface 450a, which is a surface viewed from above of the electronic device, and a second surface 450b opposite to the first surface 450a. The screen of the electronic device may be displayed on the first surface 450a. A display ground may be included in the first surface 450a or the second surface 450b. Alternatively, the circuit board 507 and the display ground may be connected to each other via the third area 630. The display ground may be electrically connected or disconnected via a circuit board (e.g., the circuit board 507 of FIG. 5) and a switch included in the circuit board 507. As the antenna is electrically connected to the display ground via the circuit board, performance of the antenna may be changed depending on winding or unwinding of the display 450. A description of the performance change of the antenna will be described with reference to FIGS. 8A to 11.

Referring to FIG. 6C, the battery/roller 505 may be physically or electrically connected to the bracket 510. The battery/roller 505 may have a cylindrical shape and may include a protrusion 660 at one or both ends. The center of the protrusion 660 may be the same as the center of the battery/roller 505. The protrusion 660 may be connected to the seating portion 670 of the bracket 510. The protrusion 660 may be rotated in the state of being connected to the seating portion 670. The protrusion 660 and the seating portion 670 may be made of a conductive material and electrically connected to each other.

FIG. 7A is a view illustrating a connection structure of components of an electronic device according to various embodiments disclosed herein. FIG. 7B is an enlarged view of a portion of the connection structure between components of the electronic device according to various embodiments disclosed herein.

According to various embodiments, an electronic device (e.g., the electronic device 101, 300, or 400 of FIGS. 1 to 5) may include a display (e.g., the display 350 of FIG. 2 or the display 450 of FIGS. 4 to 6C), a battery/roller (e.g., the battery/roller 505 of FIGS. 4 to 6C), a bracket (e.g., the bracket 510 of FIGS. 4 to 6C), a circuit board (e.g., the circuit board 507 of FIG. 5), a ground member (e.g., the ground member 506 in FIG. 5), and an antenna (e.g., the antenna 508 in FIG. 5).

The display 450, the bracket 510, the battery/roller 505, the circuit board 507, the ground member 506, and the antenna 508 of FIGS. 7A and 7B may be wholly or partly the same as the display 450, the bracket 510, the battery/roller 505, the circuit board 507, the ground member 506, and the antenna 508 of FIGS. 4 to 6C in configuration.

According to various embodiments, the housing 401 of the electronic device may include a display 450, a bracket 510, a battery/roller 505, a circuit board 507, a ground member 506, and an antenna 508. The bracket 510 may be connected to the circuit board 507. When connected to the circuit board 507, the bracket 510 may be connected by using the ground member 506. The ground member 506 may be made of a conductive material. The ground member 506 may be connected to the relatively short end portion 710 of the bracket 510. When the circuit board 507 is connected to the bracket 510 by using the ground member 506, at least a portion of the circuit board 507 may be disposed to be spaced apart from the end portion 710 of the bracket 510.

According to various embodiments, the antenna 508 may be physically or electrically connected to the circuit board 507. The antenna 508 may be located outside the circuit board 507 for smooth communication. The antenna 508 may be disposed to be spaced apart from the bracket 510. The antenna 508 may be disposed to be spaced apart from the display 450 in a second direction opposite to the first direction in which the display 450 is unwound. A plurality of antennas 508 may be included in the circuit board 507. The antenna 508 may transmit and receive signals in various frequency bands depending on the material, structure, and/or arranged position thereof.

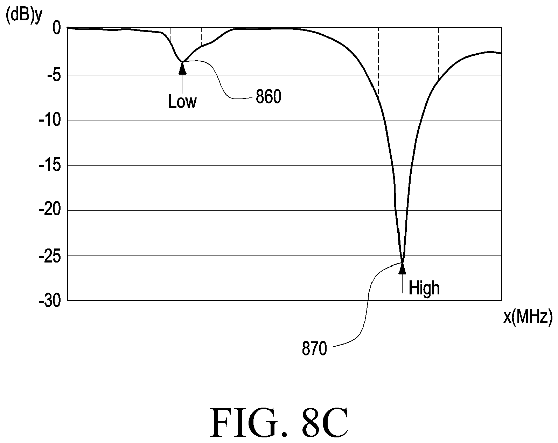

FIG. 8A is a view schematically representing of a cross-sectional view viewed from above when winding a display of an electronic device to which one antenna according to various embodiments disclosed herein is applied. FIG. 8B is a view representing of a connection relationship between components when winding the display of the electronic device to which one antenna according to various embodiments disclosed herein is applied. FIG. 8C is a view representing of a radiation characteristic of the antenna when the display of the electronic device to which one antenna according to various embodiments disclosed herein is applied is wound.

According to various embodiments, an electronic device (e.g., the electronic devices 101, 300, and 400 of FIGS. 1 to 7B) may include a housing (e.g., the housing 401 of FIGS. 4 and 5), a display (e.g., the display 350 in FIG. 2 or the display 450 in FIGS. 4 to 7B), a circuit board (e.g., the circuit board 507 in FIGS. 5 to 7B), a switch, and an antenna (e.g., the antenna 508 in FIGS. 5 to 7B).

The housing 401, the display 810, the circuit board 830, and the antenna 840 of FIGS. 8A to 8C may be partly or wholly the same as the housing 401, the display 450, the circuit board 507, and the antenna 508 of FIGS. 4 to 7B in configuration.

Referring to FIG. 8A, a cross section of the electronic device in a state in which the display 810 is wound may be identified. The housing 401 of the electronic device may include a display 810 and an antenna 840. When the display 810 is in the wound state, at least a portion thereof may be included in the housing 401. When the display 810 is in the wound state, at least a portion thereof may be exposed to the outside of the housing. The antenna 840 may be disposed to be spaced apart from the display 810 inside the housing 401. The antenna 840 may be disposed to be spaced apart from the display 810 by a first distance 850. Since the antenna 840 and the wound display 810 are disposed to be spaced apart from each other by the first distance 850, radiation characteristics of the antenna 840 may be changed. For ease of communication, the antenna 840 may be disposed on an outer portion inside the housing 401.

Referring to FIG. 8B, the electronic device may include at least one of the display 810, the switch 820, the circuit board 830, and the antenna 840. The switch 820 may be included in the circuit board 830. The switch 820 and the display 810 may be physically directly connected or electrically connected to each other. As a connection method between the switch 820 and the display 810, the method of FIGS. 6A to 7B may be used. According to an embodiment, the display 810 may be electrically and/or physically connected to the circuit board 830 via the switch 820, and the antenna 840 may be physically and/or electrically connected to the circuit board 830. The switch 820 may be connected to a display ground of the display 810. The antenna 840 and the display 810 may be electrically connected to each other via the switch 820.

Referring to FIG. 8C, FIG. 8C is a graph illustrating an example of a radiation frequency band of an antenna according to the structure of the electronic device connected in the manner of FIG. 8B. The horizontal axis (the x-axis) of the graph may represent a frequency band. The vertical axis (the y-axis) of the graph may represent a magnitude value in a logarithmic scale. The unit of the x-axis may be hertz (Hz) or megahertz (MHz). The unit of the y-axis may be decibel (dB).

Referring to FIG. 8C, as the radiation characteristics of the antenna 840 connected in the manner of FIG. 8B of the electronic device in the state in which the display 810 is wound, it may be identified that peaks are generated in a first band 860, which is a relatively low frequency band, and a second band 870, which is a relatively high frequency band. The first band 860 may be about 500 MHz to 1000 MHz. The second band 870 may be about 1500 MHz to 2800 MHz. In the state in which the display 810 is wound, the peak value of the second band 870, which is a relatively high frequency band, is about -26 dB and the peak value of the first band 860 is about -3dB. Thus, it may be identified that it is advantageous for signal transmission and reception in the high frequency band. In this case, it may be determined that the antenna 840 transmits and receives signals in a frequency band of the second band 960. The frequency range and peak value of the first band 860 and the frequency range and peak value of the second band 870 may be configured in various ways depending on at least one of the shape of the antenna, the shape of the display, and the characteristic of the circuit board.

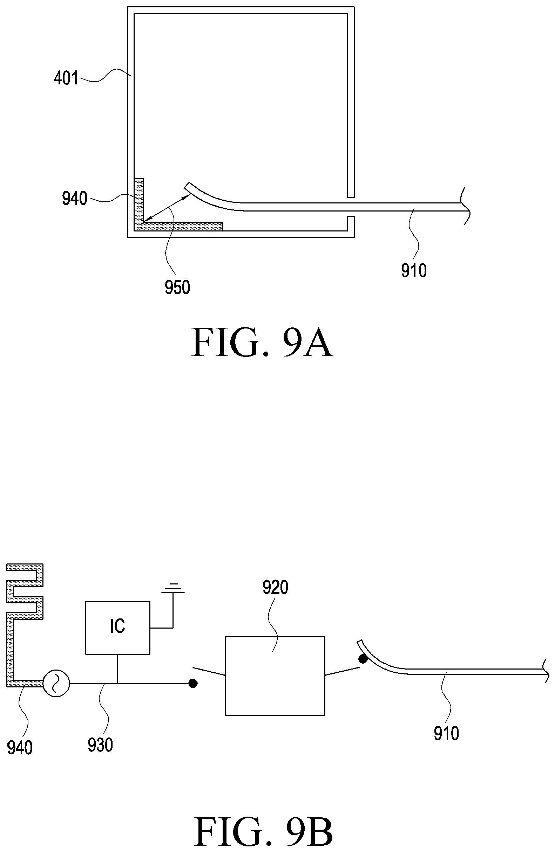

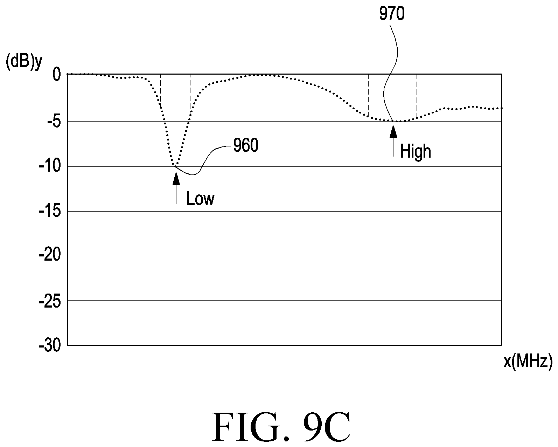

FIG. 9A is a view schematically representing of a cross-sectional view viewed from above when unwinding a display of an electronic device to which one antenna according to various embodiments disclosed herein is applied. FIG. 9B is a view representing of a connection relationship between components when unwinding the display of the electronic device to which one antenna according to various embodiments disclosed herein is applied. FIG. 9C is a view representing of a radiation characteristic of the antenna when unwinding the display of the electronic device to which one antenna according to various embodiments disclosed herein is applied.

According to various embodiments, an electronic device (e.g., the electronic devices 101, 300, and 400 of FIGS. 1 to 7B) may include a housing (e.g., the housing 401 of FIGS. 4 and 5), a display (e.g., the display 350 of FIG. 2 or the displays 450 and 810 in FIGS. 4A to 8C), a circuit board (e.g., the circuit boards 507 in FIGS. 5, 7A and 7B, and 8A to 8C), a switch (e.g., the switch 820 of FIGS. 8A to 8C), and an antenna (e.g., the antennas 508 and 840 of FIGS. 5, 7A and 7B, and 8A to 8C).

The housing 401, the display 910, the circuit board 930, and the antenna 940 of FIGS. 9A to 9C may be partly or wholly the same as the housing 401, the display 450 or 810, the circuit board 507 or 830, and the antenna 508 or 840 of FIGS. 4 to 8C in configuration.

Referring to FIG. 9A, a cross section of the electronic device in the state in which the display 910 is unwound may be identified. The housing 401 of the electronic device may include a display 910 and an antenna 940. When the display 910 is in the unwound state, at least a portion thereof may be included in the housing 401. When the display 910 is in the unwound state, at least a portion thereof may be exposed to the outside of the housing. The area of the exposed portion may be wider than that of the exposed portion of FIG. 8A. The antenna 940 may be disposed to be spaced apart from the display 910 inside the housing 401. The antenna 940 may be disposed to be spaced apart from the display 910 by a second distance 950. Since the antenna 940 and the wound display 910 are disposed to be spaced apart from each other by the second distance 950, radiation characteristics of the antenna 940 may be changed. For ease of communication, the antenna 940 may be disposed on an outer portion inside the housing 401.

Referring to FIG. 9B, the electronic device may include at least one of the display 910, the switch 920, the circuit board 930, and the antenna 940. The antenna 940 may be the same antenna as the antenna of FIG. 8B. The switch 920 may be included in the circuit board 930. The switch 920 and the display 910 may be physically directly connected or electrically connected to each other. As a connection method between the switch 920 and the display 910, the method of FIGS. 6A to 7B may be used. According to an embodiment, the display 910 may be electrically and/or physically connected to the circuit board 930 via the switch 920, and the antenna 940 may be physically and/or electrically connected to the circuit board 930. The switch 920 may be connected to a display ground of the display 910. The antenna 940 and the display 910 may be electrically connected to each other via the switch 920.

FIG. 9C is a graph illustrating an example of a radiation frequency band of an antenna according to the structure of the electronic device connected in the manner of FIG. 9B. The horizontal axis (the x-axis) of the graph may represent a frequency band. The vertical axis (the y-axis) of the graph may represent a magnitude value in a logarithmic scale. The unit of the x-axis may be hertz (Hz) or megahertz (MHz). The unit of the y-axis may be decibel (dB).

Referring to FIG. 9C, as the radiation characteristics of the antenna 940 connected in the manner of FIG. 9B of the electronic device in the state in which the display 910 is unwound, it may be identified that peaks are generated in a third band 960, which is a relatively low frequency band, and a fourth band 970, which is a relatively high frequency band. The third band 960 may be about 500 MHz to 1000 MHz. The fourth band 970 may be about 1500 MHz to 2800 MHz. In the state in which the display 910 is unwound, the peak value of the fourth band 970, which is a relatively high frequency band, is about -5 dB and the peak value of the third band 960 is about -10dB. Thus, it may be identified that it is advantageous for signal transmission and reception in the low frequency band. The frequency range and peak value of the third band 960 and the frequency range and peak value of the fourth band 970 may be configured in various ways depending on at least one of the shape of the antenna, the shape of the display, the characteristic of the circuit board, and the separation distance between the display and the antenna. In this case, it may be determined that the antenna 940 transmits and receives signals in a frequency band of the third band 960.

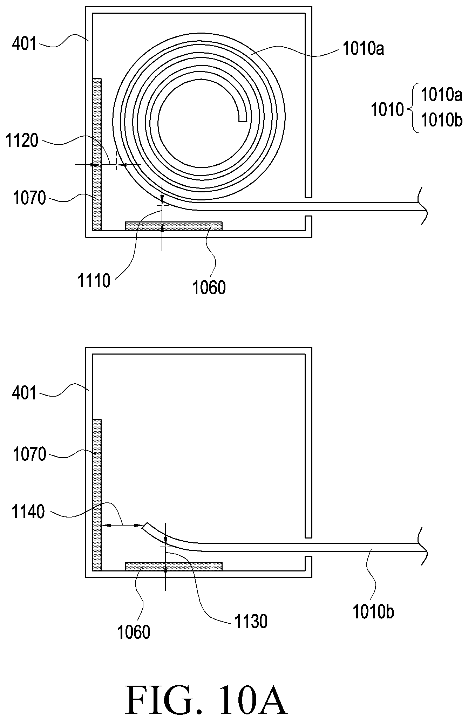

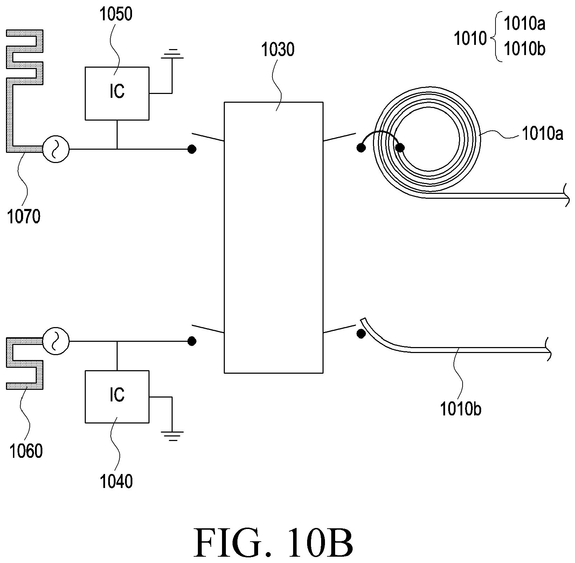

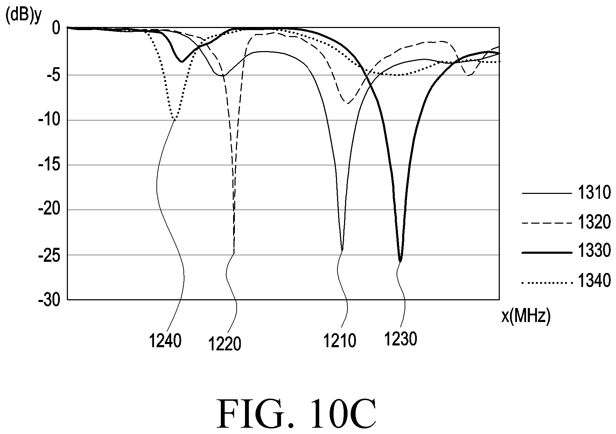

FIG. 10A is a view schematically representing a cross-sectional view viewed from above when winding and unwinding a display of an electronic device to which a plurality of antennas according to various embodiments disclosed herein are applied. FIG. 10B is a view representing of a connection relationship between components when winding and unwinding the display of the electronic device to which a plurality of antennas according to various embodiments disclosed herein are applied. FIG. 10C is a view illustrating radiation characteristics of antennas when winding and unwinding a display of an electronic device to which a plurality of antennas according to various embodiments disclosed herein are applied.

According to various embodiments, an electronic device (e.g., the electronic devices 101, 300, and 400 of FIGS. 1 to 7B) may include a housing (e.g., the housing 401 of FIGS. 4 and 5), a display (e.g., the display 350 of FIG. 2 or the displays 450 and 810 in FIGS. 4A to 9C), a circuit board (e.g., the circuit boards 507, 830, and 930 in FIGS. 5 and 7A to 9C), a switch (e.g., the switches 820 and 920 of FIGS. 8A to 8C and 9A to 9C), and an antenna (e.g., the antennas 508, 840, and 940 of FIGS. 5 and 7A to 9C).

The housing 401, the display 1010, the circuit boards 1040 and 1050, and the antennas 1060 and 1070 of FIGS. 10A to 10C may be partly or wholly the same as the housing 401, the display 450, 810, or 910, the circuit board 507, 830, or 930 and the antenna 508, 840, or 940 of FIGS. 4 to 9C in configuration.

According to various embodiments, an electronic device may include a plurality of antennas. Each of the antennas may be connected to the circuit board. Depending on the number of antennas, controllable frequency radiation characteristics may vary. For example, when the number of antennas is two, the number of controllable frequency bands may be four.

Referring to FIG. 10A, a cross section of an electronic device including a plurality of antennas may be identified. The housing 401 of the electronic device may include a display 1010, a first antenna 1060, and a second antenna 1070. The display 1010 may be in a wound state (1010a) or in an unwound state (1010b). When the display 1010 is in the wound state (1010a), at least a portion thereof may be included in the housing 401. When the display 1010 is in the wound state (1010a), at least a portion thereof may be exposed to the outside of the housing. When the display 1010 is in the unwound state (1010b), at least a portion thereof may be included in the housing 401. When the display 1010 is in the unwound state (1010b), at least a portion thereof may be exposed to the outside of the housing. The area of the exposed portion in the unwound state (1010b) may be wider than that of the exposed portion in the wound state (1010a). The first antenna 1060 and the second antenna 1070 may be different from each other in shape, function, and/or configuration.

According to various embodiments, the first antenna 1060 and the second antenna 1070 may be disposed to be spaced apart from the wound display state 1010a within the housing 401. The first antenna 1060 may be disposed to be spaced apart from the wound display 1010a by a first separation distance 1110. The second antenna 1070 may be disposed to be spaced apart from the wound display 1010a by a second separation distance 1120. Since the antennas 1060 and 1070 and the wound display 1010a are disposed to be spaced apart from each other, radiation characteristics of the antennas 1060 and 1070 may be changed in the state in which the display is wound. For ease of communication, the antennas 1060 and 1070 may be disposed on an outer portion inside the housing 401.

According to various embodiments, the first antenna 1060 and the second antenna 1070 may be disposed to be spaced apart from the unwound display 1010b within the housing 401. The first antenna 1060 may be disposed to be spaced apart from the unwound display 1010b by a third separation distance 1130. The second antenna 1070 may be spaced apart from the unwound display 1010b by a fourth separation distance 1140. Since the antennas 1060 and 1070 and the unwound display 1010b are disposed to be spaced apart from each other, radiation characteristics of the antennas 1060 and 1070 may be changed in the state in which the display is unwound.

Referring to FIG. 10B, the electronic device may include at least one of the display 1010, the switch 1030, the first circuit board 1040, the second circuit board 1050, the first antenna 1060, and the second antenna 1070. The first circuit board 1040 and the second circuit board 1050 may be included in one circuit board. The first antenna 1060 and the second antenna 1070 may be the same as the antennas 1060 and 1070 of FIG. 10A, respectively. The switch 1030 may be provided as separate components, which may be included in the first circuit board 1040 and the second circuit board 1050, respectively, or may be included in a circuit board (not illustrated) including the first circuit board 1040 and the second circuit board 1050. The switch 1030 and the display 1010 may be physically directly connected or electrically connected to each other. As a connection method between the switch 1030 and the display 1010, the method of FIGS. 6A to 7B may be used. According to an embodiment, the display 1010 may be electrically and/or physically connected to the circuit boards 1040 and 1050 via the switch 1030. The first antenna 1060 may be physically and/or electrically connected to the first circuit board 1040. The second antenna 1070 may be physically and/or electrically connected to the second circuit board 1050. The switch 1030 may be connected to a display ground of the display 1010. The switch 1030 may be electrically connected to or disconnected from the first circuit board 1040 and the second circuit board 1050 and may be connected to or disconnected from the display under the control of the circuit board. When the first antenna 1060 and the switch 1030 are electrically connected to each other, the second antenna 1070 may not be connected to the switch 1030. When the second antenna 1070 and the switch 1030 are electrically connected to each other, the first antenna 1060 may not be connected to the switch 1030.

FIG. 10C is a graph illustrating an example of radiation frequency bands of a plurality of antennas when the display 1010 according to the structure of an electronic device including the plurality of antennas connected in the manner of FIG. 10B is wound (1010a) or unwound (1010b). The horizontal axis (the x-axis) of the graph may represent a frequency band. The vertical axis (the y-axis) of the graph may represent a magnitude value in a logarithmic scale. The unit of the x-axis may be hertz (Hz) or megahertz (MHz). The unit of the y-axis may be decibel (dB).

Referring to FIG. 10C, in the electronic device in the state in which the display 1010 is wound or unwound, the first antenna 1060 and the second antenna 1070 connected in the manner of FIG. 10B may exhibit a total of four radiation characteristics. The frequency characteristic of the first antenna 1060 in the state in which the display is wound (1010a) may be represented by the thin solid line 1310. The frequency characteristic of the first antenna 1060 in the state in which the display is unwound (1010b) may be represented by the wide-interval dotted line 1320. The frequency characteristic of the second antenna 1070 in the state in which the display is wound (1010a) may be represented by the thick solid line 1330. The frequency characteristic of the second antenna 1060 in the state in which the display is unwound (1010b) may be represented by the narrow-interval dotted line 1340.

In the case of the first antenna 1060, it may be identified that the largest peak occurs in the first band 1210 in the state in which the display is wound (1010a). The first band 1210 may be included in a range of about 1500 MHz to 2800 MHz. In the state in which the display 1010 is wound (1010a), it may be identified that the peak value of the first band is about -25 dB. In the case of the first antenna 1060, it may be identified that the largest peak occurs in the second band 1220 in the state in which the display is unwound (1010b). The second band 1220 may be included in a range of about 500 MHz to 1000 MHz. In the state in which the display 1010 is unwound (1010b), it may be identified that the peak value of the second band is about -25 dB. In the case of the second antenna 1070, it may be identified that the largest peak occurs in the third band 1230 in the state in which the display is wound (1010a). The third band 1230 may be included in a higher frequency band than the first band 1210. In the state in which the display 1010 is wound (1010a), it may be identified that the peak value of the third band is about -26 dB. In the case of the second antenna 1070, it may be identified that the largest peak occurs in the fourth band 1240 in the state in which the display is unwound (1010b). The fourth band 1220 may be included in a frequency band lower than the second band. In the state in which the display 1010 is unwound (1010b), it may be identified that the peak value of the fourth band is about -10 dB.

According to an embodiment, the frequency ranges and peak values of the first band 1210 to the fourth band 1240 may be variously configured depending on at least one selected from among the type of electronic device, the type of antenna, the type of display, the characteristic of a circuit board, and the distance between the display and the antenna.

According to various embodiments, the circuit boards 1040 and 1050 may control the switch 1030 to control the frequency characteristics of the antennas 1060 and 1070. The frequency characteristics may be determined depending on the configurations of transmission and reception resources of communication. In order to obtain a required frequency characteristic, the circuit board may control the display to be connected to each of the antennas when the display is wound or unwound. The number of antennas is not limited to two and may be configured in various ways according to the design of the electronic device. When the number of antennas increases, the obtainable frequency band may increase.

An electronic device according to various embodiments disclosed herein is an electronic device in which a display is expandable, wherein the electronic device may include a foldable electronic device in which at least a portion of the display is foldable around a folding area, a slidable electronic device in which at least a portion of the display is rectilinearly movable, and a rollable electronic device in which at least a portion of a display is rollable.

In addition, the electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the foregoing detailed description of the disclosure, specific embodiments of the disclosure have been described. However, it will be evident to a person ordinarily skilled in the art that various modification may be made without departing from the scope of the present disclosure.

An electronic device according to various embodiments of the present disclosure (e.g., the electronic device 101 of FIG. 1, the electronic device 300 of FIGS. 2 to 3, and the electronic device 400 of FIGS. 4 to 5) may include a roller (e.g., the battery/roller 505 of FIGS. 5 to 6C) electrically connected to the flexible display (e.g., the display 350 of FIGS. 2 to 3, the display 450 of FIGS. 4 to 7B, and the displays 810, 910, and 1010 of FIGS. 8A to 10C) and configured to provide a rotational motion to the flexible display, a bracket (e.g., the bracket 510 of FIGS. 5 to 7B) enclosing at least a portion of the flexible display and electrically connected to one end of the roller, a PCB (e.g., the circuit board 507 of FIGS. 5 to 7B and the circuit boards 830, 930, 1040, and 1050 of FIGS. 8B, 9B and 10B) disposed outside the bracket and electrically connected to the bracket, a switch (e.g., the switch 820, 920, or 1030 of FIGS. 8B, 9B and 10B) located on the PCB, and a first antenna (e.g., the antenna 508 of FIGS. 5 to 7B, the first antennas 840, 940, and 1060 and the second antenna 1070 of FIGS. 8A, 9Aand 10A disposed to be spaced apart from the bracket and electrically connected to the PCB. In the state in which the flexible display is wound (e.g., the wound displays 810 and 1010a of FIGS. 8A to 10C), the first antenna and the flexible display may be electrically connected to each other by the switch to transmit and/or receive a signal of a first frequency band (e.g., the second band 870 of FIG. 8C and the first band 1210 of FIG. 10C). In the state in which the flexible display is unwound (e.g., the unwound displays 910 and 1010b of FIGS. 9A to 10C), the first antenna and the flexible display may be electrically connected to each other by the switch to transmit and/or receive a signal of a second frequency band (e.g.; the third band 960 of FIG. 9C and the second band 1220 of FIG. 10C).

According to various embodiments, the flexible display (e.g., the display 350 of FIGS. 2 and 3, the display 450 of FIGS. 4 to 7B, and the displays 810, 910, and 1010 of FIGS. 8A to 10C) may include a first surface (e.g., the first surface 450a of FIG. 6A) on which a screen is displayed, and at least a portion of the first surface may include a display ground, which is electrically connected to the switch (e.g., the switches 820, 920, and 1030 of FIGS. 8A to 10C).

According to various embodiments, in the state in which the flexible display is wound (e.g., the wound displays 810 and 1010a of FIGS. 8A to 10C), the switch (e.g., the switches 820, 920, and 1030 of FIGS. 8A to 10C) may be connected to a first area of the display ground. In the state in which the flexible display is unwound (e.g., the unwound displays 910 and 1010b of FIGS. 9A to 10C), the switch may be connected to a second area of the display ground which is different from the first area.

According to various embodiments, the first antenna (e.g., the antenna 508 of FIGS. 5 to 7B, the first antennas 840, 940, 1060 and the second antenna 1070 of FIGS. 8A to 10C) may be disposed to be spaced apart from the bracket in a second direction other than a first direction in which the flexible display is unwound.

According to various embodiments, the first frequency band (e.g., the second band 870 of FIG. 8C and the first band 1210 of FIG. 10C) may include a frequency band of 1500 MHz to 2800 MHz, and the second frequency band (e.g., the third band 960 of FIG. 9C and the second band 1220 of FIG. 10C) may include a frequency band of 500 MHz to 1000 MHz.

According to various embodiments, the roller (e.g., the battery/roller 505 of FIGS. 5 and 6) and the bracket (e.g., the bracket 510 of FIGS. 5 and 7) may be connected to each other, and the bracket may be is configured to maintain a fixed state when the roller rotates. The bracket may be connected to the PCB (e.g., the circuit board 507 of FIGS. 5 to 7B, and the circuit boards 830, 930, 1040, and 1050 of FIGS. 8A to 10C) via a ground member (e.g., the ground member 507 of FIGS. 5 to 7B), and the ground member may be made of a conductive material.

According to various embodiments, in the state in which the flexible display is wound (e.g., the wound displays 810 and 1010a of FIGS. 8A to 10C), the first antenna (e.g., the antenna 508 of FIGS. 5 to 7B, and the first antennas 840, 940, and 1060 and the second antenna 1070 of FIGS. 8A to 10C) may be spaced apart from the flexible display (e.g., the display 350 of FIGS. 2 and 3, the display 450 of FIGS. 4 to 7B, and the displays 810, 910, and 1010 of FIGS. 8A to 10C) by a first distance (e.g., the first distance 850 of FIG. 8A). In the state in which the flexible display is unwound (e.g., the unwound displays 910 and 1010b of FIGS. 9A to 10C), the first antenna may be spaced apart from the flexible display by a second distance (e.g., the second distance 950 of FIG. 9A).

According to various embodiments, the electronic device (e.g., the electronic device 101 of FIG. 1, the electronic device 300 of FIGS. 2 to 3, and the electronic device 400 of FIGS. 4 to 5) may further include a second antenna (e.g., the antenna 508 of FIGS. 5 to 7B and the second antenna 1070 of FIGS. 10A to 10C) electrically connected to the PCB (e.g., the circuit board 507 of FIGS. 5 to 7B and the circuit boards 830, 930, 1040, and 1050 of FIGS. 8A to 10C). The second antenna may be electrically connected to the flexible display by the switch (e.g., the switches 820, 920, and 1030 of FIGS. 8A to 10C), and the switch may be configured to be selectively connected to one of the first antenna and the second antenna.

According to various embodiments, the first antenna (e.g., the antenna 508 of FIGS. 5 to 7B and the first antennas 840, 940, and 1060 of FIGS. 8A to 10C) and the second antenna (e.g., the antenna 508 of FIGS. 5 to 7B and the second antenna 1070 of FIGS. 10A to 10C) may be different antennas, and the first antenna and the second antenna may be disposed to be spaced apart from each other.

According to various embodiments, when the switch electrically disconnects the first antenna (e.g., the antenna 508 of FIGS. 5 to 7B and the first antennas 840, 940, and 1060 of FIGS. 8A to 10C) and the flexible display from each other and electrically connects the second antenna (e.g., the antenna 508 of FIGS. 5 to 7B and the second antenna 1070 of FIGS. 10A to 10C) and the flexible display to each other, a signal in a third frequency band (e.g., the third band 1330 of FIG. 10C) may be transmitted or received in the state in which the flexible display is wound (e.g., the wound displays 810 and 1010a in FIGS. 8A to 10C), and a signal in a fourth frequency band (e.g., the fourth band 1340 of FIG. 10C) may be transmitted or received in the state in which the flexible display is unwound (e.g., the unwound displays 910 and 1010b of FIGS. 9A to 10C).

According to various embodiments, the third frequency band (e.g., the third band 1330 of FIG. 10C) includes a frequency band higher than the first frequency band (e.g., the second band 870 of FIG. 8C and the first band 1210 of FIG. 10C), and the fourth frequency band (e.g., the fourth band 1340 of FIG. 10C) may include a frequency band lower than the second frequency band (e.g., the third band 960 of FIG. 9C and the second band 1220 of FIG. 10C).

According to various embodiments, in the state in which the flexible display is wound (e.g., the wound displays 810 and 1010a of FIGS. 8A to 10C), the second antenna (e.g., the antenna 508 of FIGS. 5 to 7B and the second antenna 1070 of FIGS. 10A to 10C) are spaced apart from the flexible display by a third distance (e.g., the second separation distance 1120 of FIG. 10A). In the state in which the flexible display is unwound, the second antenna may be spaced apart from the flexible display by a fourth distance (e.g., the fourth separation distance 1140 of FIG. 10A).

According to various embodiments, the electronic device may further include a housing (e.g., housing 301 of FIGS. 2-3, and housing 401 of FIGS. 4, 5, 8A to 8C, 9A to 9C, and 10A to 10C) including the roller (e.g., the battery/roller 505 of FIGS. 5 to 6C), the bracket (e.g., the bracket 510 of FIGS. 5 to 7B), the PCB (e.g., the circuit board 507 of FIGS. 5 to 7B and the circuit boards 830, 930, 1040, and 1050 of FIGS. 8A to 10C), the first antenna (e.g., the antenna 508 of FIGS. 5 to 7B, and the first antennas 840, 940, 1060 and a second antenna 1070 of FIGS. 8A to 10C), at least a portion of the flexible display (e.g., the display 350 of FIGS. 2 to 3, the display 450 of FIGS. 4 to 7B, and the displays 810, 910, and 1010 of FIGS. 8A to 10C) being disposed inside the housing. An opening through which the flexible display is wound or unwound may be provided at one side of the housing.

According to various embodiments, The flexible display (e.g., the display 350 of FIGS. 2 to 3, the display 450 of FIGS. 4 to 7B, and the displays 810, 910, and 1010 of FIGS. 8A to 10C) may include a first area (e.g., first area 610 of FIG. 6A) configured to be at least partially exposable to the outside of the housing, a second area (e.g., second area 620 of FIG. 6A) extending from the first area and at least partially rolled by the roller, and a third area (e.g., the third region 630 of FIG. 6A) extending from the second area and connected to the roller. The expansion of the first area may be possible when the second area is unrolled from the roller.

An electronic device according to various embodiments of the present disclosure (e.g., the electronic device 101 of FIG. 1, the electronic device 300 of FIGS. 2 to 3, and the electronic device 400 of FIGS. 4 to 5) may include a flexible display (e.g., the display 350 of FIGS. 2 to 3, the display 450 of FIGS. 4 to 7B, and the displays 810, 910, and 1010 of FIGS. 8A to 10C) and a housing (e.g., the housing 301 of FIGS. 2 and 3 and the housing 401 of FIGS. 4, 5, 8A to 8C, 9A to 9C, and 10A to 10C). At least a portion of the flexible display may be disposed inside the housing, and the housing may include a roller (e.g., the battery/roller 505 of FIGS. 5 to 6C) connected to the flexible display and configured to provide a rotational motion to the flexible display, a bracket (e.g., the bracket 510 of FIGS. 5 to 7B) enclosing at least a portion of the roller and connected to one end of the roller, a PCB (e.g., the circuit board 507 of FIGS. 5 to 7B and the circuit boards 830, 930, 1040, and 1050 of FIGS. 8A to 10C) disposed outside the bracket and connected to the bracket, a switch (e.g., the switch 820, 920, or 1030 of FIGS. 8A to 10C) located on the PCB, and a first antenna (e.g., the antenna 508 of FIGS. 5 to 7B, the first antennas 840, 940, and 1060 and the second antenna 1070 of FIGS. 8A to 10C) disposed to be spaced apart from the bracket and connected to the PCB.

According to various embodiments, the flexible display (e.g., the display 350 of FIGS. 2 and 3, the display 450 of FIGS. 4 to 7B, and the displays 810, 910, and 1010 of FIGS. 8A to 10C) may include a first surface (e.g., the first surface 450a of FIG. 6A) on which a screen is displayed, and at least a portion of the first surface may include a display ground, which is electrically connected to the switch (e.g., the switches 820, 920, and 1030 of FIGS. 8A to 10C).

According to various embodiments, the roller (e.g., the battery/roller 505 of FIGS. 5 to 6C) and the bracket (e.g., the bracket 510 of FIGS. 5 to 7B) may be connected to each other, and the bracket may be configured to maintain a fixed state when the roller rotates. The bracket may be connected to the PCB (e.g., the circuit board 507 of FIGS. 5 to 7B, and the circuit boards 830, 930, 1040, and 1050 of FIGS. 8A to 10C) via a ground member (e.g., the ground member 507 of FIGS. 5 to 7B), and the ground member may be made of a conductive material.

According to various embodiments, in the state in which the flexible display is wound (e.g., the wound displays 810 and 1010a of FIGS. 8A to 10C), the first antenna (e.g., the antenna 508 of FIGS. 5 to 7B, and the first antennas 840, 940, and 1060 and the second antenna 1070 of FIGS. 8A to 10C) may be spaced apart from the flexible display (e.g., the display 350 of FIGS. 2 and 3, the display 450 of FIGS. 4 to 7B, and the displays 810, 910, and 1010 of FIGS. 8A to 10C) by a first distance (e.g., the first distance 850 of FIG. 8A). In the state in which the flexible display is unwound (e.g., the unwound displays 910 and 1010b of FIGS. 9A to 10C), the first antenna may be spaced apart from the flexible display by a second distance (e.g., the second distance 950 of FIG. 9A).

According to various embodiments, the electronic device (e.g., the electronic device 101 of FIG. 1, the electronic device 300 of FIGS. 2 to 3, and the electronic device 400 of FIGS. 4 to 5) may further include a second antenna (e.g., the antenna 508 of FIGS. 5 to 7B and the second antenna 1070 of FIGS. 10A to 10C) electrically connected to the PCB (e.g., the circuit board 507 of FIGS. 5 to 7B and the circuit boards 830, 930, 1040, and 1050 of FIGS. 8A to 10C). The second antenna may be electrically connected to the flexible display by the switch (e.g., the switches 820, 920, and 1030 of FIGS. 8A to 10C), and the switch may be configured to be selectively connected to one of the first antenna and the second antenna.

According to various embodiments, an opening through which the flexible display is wound or unwound may be provided at one side of the housing (e.g., the housing 301 of FIGS. 2 and 3 and the housing 401 of FIGS. 4, 5, 8, 9, and 10). The flexible display (e.g., the display 350 of FIGS. 2 to 3, the display 450 of FIGS. 4 to 7B, and the displays 810, 910, and 1010 of FIGS. 8A to 10C) may include a first area (e.g., first area 610 of FIG. 6A) configured to be at least partially exposable to the outside of the housing, a second area (e.g., second area 620 of FIG. 6A) extending from the first area and at least partially rolled by the roller, and a third area (e.g., the third region 630 of FIG. 6A) extending from the second area and connected to the roller. The expansion of the first area may be possible when the second area is unrolled from the roller.

## Claims

1. An electronic device comprising:
a flexible display (160, 350, 450, 810, 910);
a roller (505) electrically connected to the flexible display and configured to wind or unwind the flexible display around the roller;
a bracket (510) enclosing at least a portion of the flexible display and electrically connected to one end of the roller;
a PCB disposed outside the bracket and electrically connected to the bracket;
a switch (820, 920) located on the PCB; and
a first antenna disposed to be spaced apart from the bracket and electrically connected to the PCB,
wherein, in a state in which the flexible display is wound, the first antenna and the flexible display are electrically connected to each other by the switch to transmit, receive or transmit and receive a signal of a first frequency band, and
wherein, in a state in which the flexible display is unwound, the first antenna and the flexible display are electrically connected to each other by the switch to transmit, receive or transmit and receive a signal of a second frequency band.

2. The electronic device of claim 1, wherein the flexible display comprises a first surface on which a screen is displayed, and at least a portion of the first surface comprises a display ground electrically connected to the switch.

3. The electronic device of claim 2, wherein, in the state in which the flexible display is wound, the switch is connected to a first area of the display ground, and in the state in which the flexible display is unwound, the switch is connected to a second area of the display ground which is different from the first area.

4. The electronic device of claim 1, wherein the first antenna is disposed to be spaced apart from the bracket in a second direction different from a first direction in which the flexible display is unwound.

5. The electronic device of claim 1, wherein the first frequency band comprises a frequency band of 1500 MHz to 2800 MHz, and the second frequency band comprises a frequency band of 500 MHz to 1000 MHz.

6. The electronic device of claim 1, wherein the roller and the bracket are connected to each other, and the bracket is configured to maintain a fixed state when the roller rotates,
the bracket is connected to the PCB via a ground member, and
the ground member is made of a conductive material.

7. The electronic device of claim 1, wherein, in the state in which the flexible display is wound, the first antenna is spaced apart from the flexible display by a first distance, and
wherein, in the state in which the flexible display is unwound, the first antenna is spaced apart from the flexible display by a second distance.

8. The electronic device of claim 1, further comprising a housing which includes: the roller, the bracket, the PCB, and the first antenna, wherein at least a portion of the flexible display being disposed in the housing,
wherein an opening through which the flexible display is wound or unwound is provided at one side of the housing.

9. The electronic device of claim 8, wherein the flexible display comprises:
a first area configured to be at least partially exposable to outside of the housing;
a second area extending from the first area and at least partially rolled up by the roller; and
a third area extending from the second area and connected to the roller, and
wherein the first area is configured to be expandable when the second area is unrolled from the roller.

10. An electronic device comprising:
a flexible display; and
a housing in which at least a portion of the flexible display is disposed therein,
wherein the housing comprises:
a roller (505) physically or electrically connected to the flexible display and configured to provide a wind or unwind to the flexible display around the roller;
a bracket (510) surrounding at least a portion of the roller and physically or electrically connected to one end of the roller;
a PCB disposed outside the bracket and physically or electrically connected to the bracket via a ground member (506);
a switch located on the PCB;
a first antenna disposed to be spaced apart from the bracket and electrically connected to the PCB, and
**characterized in that** the electronic device further comprises a second antenna electrically connected to the PCB,
wherein each of the first antenna and second antenna is electrically connectable to the flexible display by the switch, and the switch is configured to be selectively electrically connected to one of the first antenna and the second antenna.

11. The electronic device of claim 10, wherein the flexible display comprises a first surface on which a screen is displayed, and at least a portion of the first surface comprises a display ground electrically connected to the switch.

12. The electronic device of claim 10, wherein the roller and the bracket are physically or electrically connected to each other, and the bracket is configured to maintain a fixed state when the roller rotates,
the bracket is physically or electrically connected to the PCB via a ground member, and
the ground member is made of a conductive material.

13. The electronic device of claim 10, wherein, in a state in which the flexible display is wound, the first antenna is spaced apart from the flexible display by a first distance, and
wherein, in a state in which the flexible display is unwound, the first antenna is spaced apart from the flexible display by a second distance.

14. The electronic device of claim 10, wherein an opening through which the flexible display is wound or unwound is provided at one side of the housing,
wherein the flexible display comprises:
a first area configured to be at least partially exposable to outside of the housing;
a second area extending from the first area and at least partially rolled up by the roller; and
a third area extending from the second area and connected to the roller, and
wherein the first area is configured to be expandable when the second area is unrolled from the roller.

## Patentansprüche

1. Elektronische Vorrichtung, die Folgendes umfasst:
ein flexibles Display (160, 350, 450, 810, 910);
eine Walze (505), die mit dem flexiblen Display elektrisch verbunden ist und so konfiguriert ist, dass es das flexible Display um die Walze aufwickelt oder abwickelt;
eine Halterung (510), die mindestens einen Teil des flexiblen Displays umschließt und mit einem Ende der Walze elektrisch verbunden ist;
eine PCB, die außerhalb der Halterung angeordnet und mit der Halterung elektrisch verbunden ist;
einen Schalter (820, 920), der sich auf der PCB befindet; und
eine erste Antenne, die so angeordnet ist, dass sie von der Halterung beabstandet ist und mit der PCB elektrisch verbunden ist,
wobei in einem Zustand, in dem das flexible Display aufgewickelt ist, die erste Antenne und das flexible Display durch den Schalter elektrisch miteinander verbunden sind, um ein Signal eines ersten Frequenzbandes zu übertragen, zu empfangen oder zu übertragen und zu empfangen, und
wobei in einem Zustand, in dem das flexible Display abgewickelt ist, die erste Antenne und das flexible Display durch den Schalter elektrisch miteinander verbunden sind, um ein Signal eines zweiten Frequenzbandes zu übertragen, zu empfangen oder zu übertragen und zu empfangen.

2. Elektronische Vorrichtung nach Anspruch 1, wobei das flexible Display eine erste Oberfläche umfasst, auf der ein Bildschirm angezeigt wird, und mindestens ein Teil der ersten Oberfläche eine Display-Masse umfasst, die mit dem Schalter elektrisch verbunden ist.

3. Elektronische Vorrichtung nach Anspruch 2, wobei in dem Zustand, in dem das flexible Display aufgewickelt ist, der Schalter mit einem ersten Bereich der Display-Masse verbunden ist, und in dem Zustand, in dem das flexible Display abgewickelt ist, der Schalter mit einem zweiten Bereich der Display-Masse verbunden ist, der sich von dem ersten Bereich unterscheidet.

4. Elektronische Vorrichtung nach Anspruch 1, wobei die erste Antenne so angeordnet ist, dass sie von der Halterung in einer zweiten Richtung beabstandet ist, die sich von einer ersten Richtung unterscheidet, in der das flexible Display abgewickelt wird.

5. Elektronische Vorrichtung nach Anspruch 1, wobei das erste Frequenzband ein Frequenzband von 1500 MHz bis 2800 MHz umfasst und das zweite Frequenzband ein Frequenzband von 500 MHz bis 1000 MHz umfasst.

6. Elektronische Vorrichtung nach Anspruch 1, wobei die Walze und die Halterung miteinander verbunden sind und die Halterung so konfiguriert ist, dass sie beim Drehen der Walze einen festen Zustand beibehält,
die Halterung über ein Masseelement mit der PCB verbunden ist, und
das Masseelement aus einem leitfähigen Material besteht.

7. Elektronische Vorrichtung nach Anspruch 1, wobei in dem Zustand, in dem das flexible Display aufgewickelt ist, die erste Antenne um einen ersten Abstand von dem flexiblen Display beabstandet ist, und
wobei in dem Zustand, in dem das flexible Display abgewickelt ist, die erste Antenne um einen zweiten Abstand von dem flexiblen Display beabstandet ist.

8. Elektronische Vorrichtung nach Anspruch 1, die ferner ein Gehäuse umfasst, das Folgendes enthält: die Walze, die Halterung, die PCB und die erste Antenne, wobei mindestens ein Teil des flexiblen Displays in dem Gehäuse angeordnet ist,
wobei an einer Seite des Gehäuses eine Öffnung vorgesehen ist, durch die das flexible Display aufgewickelt oder abgewickelt wird.

9. Elektronische Vorrichtung nach Anspruch 8, wobei das flexible Display Folgendes umfasst:
einen ersten Bereich, der so konfiguriert ist, dass er zumindest teilweise nach außerhalb des Gehäuses freigelegt ist;
einen zweiten Bereich, der sich von dem ersten Bereich erstreckt und zumindest teilweise von der Walze aufgerollt wird; und
einen dritten Bereich, der sich von dem zweiten Bereich erstreckt und mit der Walze verbunden ist, und
wobei der erste Bereich so konfiguriert ist, dass er dehnbar ist, wenn der zweite Bereich von der Walze abgerollt wird.

10. Elektronische Vorrichtung, die Folgendes umfasst:
ein flexibles Display; und
ein Gehäuse, in dem mindestens ein Teil des flexiblen Displays angeordnet ist,
wobei das Gehäuse Folgendes umfasst:
eine Walze (505), die mit dem flexiblen Display physisch oder elektrisch verbunden ist und so konfiguriert ist, dass sie das flexible Display um die Walze herum aufwickelt oder abwickelt;
eine Halterung (510), die mindestens einen Teil der Walze umgibt und mit einem Ende der Walze physisch oder elektrisch verbunden ist;
eine PCB, die außerhalb der Halterung angeordnet ist und über ein Masseelement (506) mit der Halterung physisch oder elektrisch verbunden ist;
einen Schalter, der sich auf der PCB befindet;
eine erste Antenne, die so angeordnet ist, dass sie von der Halterung beabstandet ist und mit der PCB elektrisch verbunden ist, und
**gekennzeichnet dadurch, dass** die elektronische Vorrichtung ferner eine zweite Antenne umfasst, die mit der PCB elektrisch verbunden ist,
wobei sowohl die erste Antenne als auch die zweite Antenne über den Schalter mit dem flexiblen Display elektrisch verbunden werden können und der Schalter so konfiguriert ist, dass er selektiv mit der ersten oder der zweiten Antenne elektrisch verbunden werden kann.

11. Elektronische Vorrichtung nach Anspruch 10, wobei das flexible Display eine erste Oberfläche umfasst, auf der ein Bildschirm angezeigt wird, und mindestens ein Teil der ersten Oberfläche eine Display-Masse umfasst, die mit dem Schalter elektrisch verbunden ist.

12. Elektronische Vorrichtung nach Anspruch 10, wobei die Walze und die Halterung physisch oder elektrisch miteinander verbunden sind und die Halterung so konfiguriert ist, dass sie beim Drehen der Walze einen festen Zustand beibehält,
die Halterung über ein Masseelement mit der PCB physisch oder elektrisch verbunden ist, und
das Masseelement aus einem leitfähigen Material besteht.

13. Elektronische Vorrichtung nach Anspruch 10, wobei in einem Zustand, in dem das flexible Display aufgewickelt ist, die erste Antenne um einen ersten Abstand von dem flexiblen Display beabstandet ist, und
wobei in einem Zustand, in dem das flexible Display abgewickelt ist, die erste Antenne um einen zweiten Abstand von dem flexiblen Display beabstandet ist.

14. Elektronische Vorrichtung nach Anspruch 10, wobei eine Öffnung an einer Seite des Gehäuses vorgesehen ist, durch die das flexible Display aufgewickelt oder abgewickelt wird,
wobei das flexible Display Folgendes umfasst:
einen ersten Bereich, der so konfiguriert ist, dass er zumindest teilweise nach außerhalb des Gehäuses freigelegt ist;
einen zweiten Bereich, der sich von dem ersten Bereich erstreckt und zumindest teilweise von der Walze aufgewickelt wird; und
einen dritten Bereich, der sich von dem zweiten Bereich erstreckt und mit der Walze verbunden ist, und
wobei der erste Bereich so konfiguriert ist, dass er dehnbar ist, wenn der zweite Bereich von der Walze abgewickelt wird.

## Revendications

1. Dispositif électronique comprenant :
une unité d'affichage flexible (160, 350, 450, 810, 910) ;
un rouleau (505) connecté électriquement à l'unité d'affichage flexible et configuré pour enrouler ou dérouler l'unité d'affichage flexible autour du rouleau ;
un support (510) incluant au moins une portion de l'unité d'affichage flexible et connecté électriquement à une extrémité du rouleau ;
une PCB disposée à l'extérieur du support et connectée électriquement au support ;
un commutateur (820, 920) situé sur la PCB ; et
une première antenne disposée de façon à être espacée du support et connectée électriquement à la PCB,
où, dans un état dans lequel l'unité d'affichage flexible est enroulée, la première antenne et l'unité d'affichage flexible sont connectées l'une à l'autre électriquement par le commutateur pour transmettre, recevoir, ou transmettre et recevoir un signal d'une première bande de fréquence, et
où, dans un état dans lequel l'unité d'affichage flexible est déroulée, la première antenne et l'unité d'affichage flexible sont connectées l'une à l'autre électriquement par le commutateur pour transmettre, recevoir, ou transmettre et recevoir un signal d'une deuxième bande de fréquence.

2. Dispositif électronique selon la revendication 1, où l'unité d'affichage flexible comprend une première surface sur laquelle un écran est affiché, et au moins une portion de la première surface comprend une masse d'unité d'affichage connectée électriquement au commutateur.

3. Dispositif électronique selon la revendication 2, où, dans un état dans lequel l'unité d'affichage flexible est enroulée, le commutateur est connecté à une première zone de la masse d'unité d'affichage, et dans un état dans lequel l'unité d'affichage flexible est déroulée, le commutateur est connecté à une deuxième zone de la masse d'unité d'affichage qui est différente de la première zone.

4. Dispositif électronique selon la revendication 1, où la première antenne est disposée de façon à être espacée du support dans une deuxième direction différente d'une première direction dans laquelle l'unité d'affichage flexible est déroulée.

5. Dispositif électronique selon la revendication 1, où la première bande de fréquence comprend une bande de fréquence allant de 1500 MHz à 2800 MHz, et la deuxième bande de fréquence comprend une bande de fréquence allant de 500 MHz à 1000 MHz.

6. Dispositif électronique selon la revendication 1, où le rouleau et le support sont connectés l'un à l'autre, et le support est configuré de façon à maintenir un état fixe lorsque le rouleau tourne,
le support est connecté à la PCB via un élément de masse, et
l'élément de masse consiste en un matériau conducteur.

7. Dispositif électronique selon la revendication 1, où, dans un état dans lequel l'unité d'affichage flexible est enroulée, la première antenne est espacée de l'unité d'affichage flexible par une première distance, et
où, dans un état dans lequel l'unité d'affichage flexible est déroulée, la première antenne est espacée de l'unité d'affichage flexible par une deuxième distance.

8. Dispositif électronique selon la revendication 1, comprenant en outre un boîtier qui inclut : le rouleau, le support, la PCB, et la première antenne, où au moins une portion de l'unité d'affichage flexible est disposée dans le boîtier,
où une ouverture à travers laquelle l'unité d'affichage flexible est enroulée ou déroulée est prévue d'un côté du boîtier.

9. Dispositif électronique selon la revendication 8, où l'unité d'affichage flexible comprend :
une première zone configurée de façon à pouvoir être au moins partiellement exposée à l'extérieur du boîtier ;
une deuxième zone s'étendant à partir de la première zone et enroulée au moins partiellement par le rouleau ; et
une troisième zone s'étendant à partir de la deuxième zone et connectée au rouleau, et
où la première zone est configurée de façon à être extensible lorsque la deuxième zone est déroulée du rouleau.

10. Dispositif électronique comprenant :
une unité d'affichage flexible ; et
un boîtier dans lequel au moins une portion de l'unité d'affichage flexible est disposée, où le boîtier comprend :
un rouleau (505) connecté physiquement ou électriquement à l'unité d'affichage flexible et configuré de façon à permettre un enroulement ou un déroulement de l'unité d'affichage flexible autour du rouleau ;
un support (510) entourant au moins une portion du rouleau et connecté physiquement ou électriquement à une extrémité du rouleau ;
une PCB disposée à l'extérieur du support et connectée physiquement ou électriquement au support via un élément de masse (506) ;
un commutateur situé sur la PCB ;
une première antenne disposée de façon à être espacée du support et connectée électriquement à la PCB, et
**caractérisé en ce que** le dispositif électronique comprend en outre une deuxième antenne connectée électriquement à la PCB,
où chacune de la première et de la deuxième antenne peut être connectée électriquement à l'unité d'affichage flexible par le commutateur, et le commutateur est configuré pour être connecté électriquement de façon sélective à la première ou à la deuxième antenne.

11. Dispositif électronique selon la revendication 10, où l'unité d'affichage flexible comprend une première surface sur laquelle un écran est affiché, et au moins une portion de la première surface comprend une masse d'unité d'affichage connectée électriquement au commutateur.

12. Dispositif électronique selon la revendication 10, où le rouleau et le support sont connectés l'un à l'autre physiquement ou électriquement, et le support est configuré de façon à maintenir un état fixe lorsque le rouleau tourne,
le support est connecté physiquement ou électriquement à la PCB via un élément de masse, et
l'élément de masse consiste en un matériau conducteur.

13. Dispositif électronique selon la revendication 10, où, dans un état dans lequel l'unité d'affichage flexible est enroulée, la première antenne est espacée de l'unité d'affichage flexible par une première distance, et
où, dans un état dans lequel l'unité d'affichage flexible est déroulée, la première antenne est espacée de l'unité d'affichage flexible par une deuxième distance.

14. Dispositif électronique selon la revendication 10, où une ouverture à travers laquelle l'unité d'affichage flexible est enroulée ou déroulée est prévue d'un côté du boîtier,
où l'unité d'affichage flexible comprend :
une première zone configurée de façon à pouvoir être au moins partiellement exposée à l'extérieur du boîtier ;
une deuxième zone s'étendant à partir de la première zone et enroulée au moins partiellement par le rouleau ; et
une troisième zone s'étendant à partir de la deuxième zone et connectée au rouleau, et
où la première zone est configurée de façon à être extensible lorsque la deuxième zone est déroulée du rouleau.
